# EUROPEAN PATENT APPLICATION

(11) **EP 1 380 214 A1**
(43) Date of publication of application: **14.01.2004**
(21) Application number: 03013224.5
(22) Date of filing: 12.06.2003
(51) Int. Cl.: A23K 1/00

(54) **Process for the production of bulk materials containing small quantities of active substance**

(30) Priority: 13.07.2002 DE 10231709
(71) Applicant: Degussa AG, 40474 Düsseldorf (DE)
(72) Inventor: Pfaff, Gerald, 63517 Rodenbach (DE); Polzer, Wolfgang, 63584 Gründau (DE); Bunzel, Detlef, 63743 Aschaffenburg (DE); Greissinger, Dieter, Dr., 61194 Niddatal (DE); Kniesel, Heidemarie, Dr., 63768 Hösbach (DE); Pack, Michael, Dr., 63755 Alzenau (DE); Beste, Rainer, Dr., 63755 Alzenau (DE); Pérez, José, Dr., 63505 Langenselbold (DE)

(57) **Abstract**

The invention relates to a process for the production of bulk materials containing small quantities of one or more active substance(s) by application of liquids, in which
a) the active substance(s) is/are dissolved in water or optionally emulsified with the addition of an emulsifier and
b) the solution (emulsion) containing water, active substance(s) and optionally emulsifier is applied on to the bulk material, which is particularly mixed feed for animal nutrition.

## Description

### Field of the Invention

The invention relates to a process for the production of bulk materials containing small quantities of one or more active substance(s), in which
a) the active substance(s) is/are dissolved in water or optionally emulsified with the addition of an emulsifier and
b) the solution (emulsion) containing water, active substance(s) and optionally emulsifier is applied on to the bulk material, which is particularly mixed feed for animal nutrition.

### Background of the Invention

An optimum supply of active substances, particularly vitamins, plays an important part in the healthy and environmentally compatible feeding of productive livestock. In addition to factors related to need, economic and applicational requirements also have to be taken into account for use in mixed feed.

Thus, for example, in the production of mixed feed for animal nutrition, the combining of several nutrients and active substances in a precisely defined metered quantity with adequate homogeneity of the mixed substances and with a low time and energy input is a central problem. So that the active substances are regularly and uniformly available in the animal's supplies, the distribution of the active substances, particularly the microcomponents used in very small quantities, such as vitamins, coloring pigments, enzymes etc., in the overall mix, plays an important part. It is equally important that the quantity of active substance needed to maintain health and specified in the ration design is obtained and remains at all times.

An increasingly important factor in the feeding of productive livestock is harmlessness for the consumer, taking into account the position in the food chain, associated with the demand that, as far as possible, no auxiliary substances, stabilizers etc., or only small quantities thereof, are used in the formulation of the feedstuff or additive.

It is therefore known that minor components, such as e.g. vitamins, trace elements or pigments, are conventionally metered into the main mix in the form of premixes with one another and/or with carrier substances. This dilution step permits better metering and distribution in the finished feed. In the USA, for example, individual additives are also diluted with a carrier substance and added to the mixed feed in addition to a standard premix to adapt to special requirements. In Germany, for example, additives with an upper limit, such as vitamin A or vitamin D, have to be used as a premix with at least 0.2% of the main mix, according to a statutory provision.

Premixes are conventionally produced, stored, sold and used in the mixed feed works in a standardized composition. Now, while individual, isolated additives are relatively stable in themselves in terms of their properties and their content of active substance, premixes, and particularly premixes e.g. with mineral and trace elements, are much less stable. During their storage and processing, humidity, heat, pressure and oxygen have an effect, so that redox reactions and/or acid/base reactions can occur to a certain extent, which reduce the desired and expected content of active substance (D. Dressler, Mühle + Mischfuttertechnik (1993) 27/28, 327-335). Now, in order to avoid an underdose in the finished mixed feed, which reduces the expected effect of the active substance, the mixed feed producer is forced to overdose on the basis of experimental values, which can compensate for the loss of active substance, but in the most unfavorable case is not economical or, in a few cases, even harmful.

There are a number of technical solutions for the rational mixing of different components into sufficiently homogeneous mixtures. Premix systems conventionally consist of a supply and metering device and a separate high-performance mixer, and are often produced separately from the main mix in terms of location and time, so that storage and transport periods arise and the user is dependent on certain commercially available compositions.

To achieve adequate distribution accuracies, it is known to produce a defined premix in one step and to apply this on to the planned mix in a second step and in separate pieces of equipment. Methods and devices are also known for this purpose, for applying the liquids on to solid carriers, optionally in combination with other components. Alternatively, processes have been developed to convert active substances occurring as liquids into a dilute state, optionally as an emulsion in the case of water-insoluble liquids, and to apply them on to feeds by means of technical solutions for the conveying, metering and spraying of liquids.

EP 0 835 613 A2, for example, relates to emulsions stabilized with protective colloids, which, however, are converted to dry powders because of the fine distribution in the feed that is necessary and to stabilize the active substances. US 4,670,247 describes a similar route with the stabilizing of individual vitamins. To achieve a liquid formulation that is stable in storage, DE 42 00 728 A1 mentions a solution that avoids the undesirable ingredients mentioned there but is limited to liquid feeds and does not provide for use in solid feeds. A formulation intended for solid feeds and drinking water is provided by EP 0 772 978 A1, in that liquid mineral and vitamin premixes are kept separate to avoid content-reducing reactions. WO 01/70044 A1 also avoids the problem of the interaction of different ingredients by means of separate premixes, which have to be mixed shortly before use. In addition, the post-pelleting process (PPA), in which liquid active substances and/or mixtures thereof are sprayed on to mixed feed or mixed feed pellets in suitable apparatus after the production thereof, is known in practice.

Many active substances that are used in animal nutrition, particularly vitamins, occur in liquid form during their production, often as viscous oils. Technical solutions for handling viscous substances are rather complex, expensive and prone to failure, which is why they cannot be used particularly in cost-sensitive areas, such as e.g. for inexpensive basic chemical preparations or in the mixed feed industry. Thus, these active substances have, until now, predominantly been converted to powdered preparations at some expense, which makes it difficult to use them economically. However, an economic operating method is one of the basic requirements of modern productive livestock nutrition.

Without these solutions, the distribution and metering accuracy of the viscous liquid does not achieve the required quality. However, if a liquid is applied on to a solid carrier, additional steps are necessary, which increase the volume, introduce unnecessary ballast substances and make the application more expensive. The same applies to the conversion of the desired liquid to a dilution or, in the case of non-aqueous systems, an emulsion, which in turn has a disadvantageous effect in terms of transport and storage stability and transport and storage volume. However, this dilution is necessary to obtain the required distribution accuracy in the known metering, distribution and mixing processes. Small quantities of liquid active substances, e.g. in the range of 10 to 100 ppm as a proportion of the overall mix, or their preparations, are therefore seldom used directly as such in practice. Special solid premixes, used for this purpose e.g. in the mixed feed industry, combine the stability disadvantages during storage and transport of the pure active substance with possible incompatibilities between the substances, which can lead to losses of active substances up to the point of their use.

The proposed solutions mentioned discuss these disadvantages in detail and overcome them usually by stabilizing with different substances. These include e.g. non-aqueous solvents, antioxidants, suspension promoters, fungicides, complexing agents and preservatives, which in turn are mentioned in DE 42 00 728 as critical and undesirable. This therefore manages with a smaller number of stabilizing substances using high-pressure homogenization at 800 bar.

The post-pelleting application also mentioned is a purely technical solution, which does not solve the problems of liquid active substances in terms of stability, interaction etc., but at the same time is associated with disadvantages such as poor distribution, abrasion of the active substance on the surface of the pellets sprayed with the active substance and high requirements in terms of metering accuracy.

### Summary of the Invention

The object of the present invention is therefore to provide a process by which active substances, particularly non-water-soluble oils, are mixed into a solid mix in a predetermined quantity with adequate distribution accuracy, with the volume introduced, the number and quantity of formulation auxiliaries and the active substance losses over the preparation chain being kept low at the same time.

The present invention provides a process for the production of bulk materials containing small quantities of one or more active substances, which is characterized in that
a) the active substance(s) is/are dissolved in water or optionally emulsified with the addition of an emulsifier and
b) the solution (emulsion) containing water, active substance(s) and optionally emulsifier is applied on to the bulk material, which is particularly mixed feed and which is present in finely divided or granulated form, and is mixed with this.

### Detailed Description of the Invention

The solution (emulsion) advantageously consists of water, active substance(s) and optionally emulsifier.

The active substances to be applied, which in many cases take the form of oily liquids, are converted to a solution or emulsion in portions and in a small quantity, dependent on consumption, only directly before application, the viscosity thereof being just sufficient for simple and conventional conveying and metering devices and the content of formulation auxiliaries therein being low owing to the brief period between production and spraying on to the bulk material.

The viscosity is suitably less than 3000 mPa.s, particularly less than 2000 mPa.s.

The term "directly before application" is understood to mean a period of > 0 min to 24 h, particularly up to 12 h, particularly preferably up to 6 h.

The production of the ready-to-use preparation takes place at the point of use, at a time immediately beforehand. In the case of water-soluble additives, these are only dissolved in water. In the case of fat-soluble active substances, an oil-in-water emulsion is prepared by adding a conventional emulsifier to a charge of water. This emulsifier can consist of alginates, lecithins, pectins, polysorbates and similar, which are preferably harmless and approved for use in feeds or foodstuffs. The quantity of the emulsifier in relation to the total quantity of the active substance(s) used is 0.1 to 15 %wt.%, preferably 0.1 to 10% and particularly 0.1 to 0.3%. With these quantities of emulsifier and the selected conditions, the emulsions remain stable for up to 24 hours, but at least 6 hours, i.e. they do not separate and lead to possible inhomogeneities of the active substance in the feed mix. After adding the emulsifier, the oily active substance is added with the action of shear forces. To achieve the shear forces, conventional emulsifying devices such as static mixers, shear pumps or high-speed mixers are suitable. The use of micromixers even allows emulsifier to be dispensed with completely. To facilitate the emulsifying operation, the temperature of the components can be increased from ambient temperature to 30 to 70°C. To prevent a possible destruction of sensitive active substances, however, temperatures of 30 to 60°C are advantageous. In this way, emulsions with an active substance content of 0.5 to 60 wt.% can be produced. Depending on the formulation design and the desired distribution coefficient, however, concentration ranges of between 1 and 50 wt.%, particularly 1 and 20 wt.%, are also suitable.

The oily active substance to be applied is kept in stock in the purity prescribed for the feed and foodstuffs sector and thus with the highest possible active substance stability and with low space requirements. Not until directly before the planned use is e.g. a partial quantity of 50 ml to 36 l, particularly 150 ml to 24 l, of the oil emulsified in a suitable vessel in a preheated quantity of water and in the presence of an emulsifier using a mixing tool with a high shear effect. The emulsion thus produced is mixed with the bulk material directly using suitable metering and spraying devices.

This method of operation is based on a simple, inexpensive design with peripheral equipment kept correspondingly simple. Together with the small transport and storage volume for the active substance and correspondingly reduced costs, and particularly the cost saving for the carrier substance that is not required, there is a cost advantage for the mixed feed works guaranteeing it more economical operation. The equipment can be very readily integrated into existing units and is suitable for various existing mixers, drums or PPA applications.

At the same time, the procedure is suitable for various water- and fat-soluble active substances, which can be used individually, but also simultaneously, and as an emulsion or suspension. In particular, this procedure has the advantage compared with the prior art that no losses of active substance can occur during previous storage and transport periods, and also no losses of active substance can occur as a result of product incompatibilities in premixes or preparations on carriers. It is also possible to dispense with oil as a diluent, which can contribute to the degradation of the active substance in the case of vegetable oils owing to the unsaturated fatty acids content. It is especially advantageous, however, that the mixed feed producer is completely free in drawing up his formulation design and is not dependent on existing formulations in a premix.

In addition to ready-to-use preparations with only one active substance, however, various active substances, including water- and/or fat-soluble ones, can also be mixed. Suitable active substances are, for example, vitamins such as vitamin A, vitamin D, vitamin E, nicotinamide, other B vitamins, provitamins or their esters, coloring substances such as carotinoids, xanthophylls and others, enzymes such as xylanases, glucanases, phytases and others, together with other active substances used in feed production in small quantities. The active substance is not destroyed under the conditions described, but can be found both in the preparation and in the finished treated mixed feed within the limits of analytical accuracy. The spraying on to mixed feed results in excellent distribution coefficients, even under very simple spraying conditions.

The spraying of liquids in mixing chambers is known from the prior art.

### Brief Description of the Figure

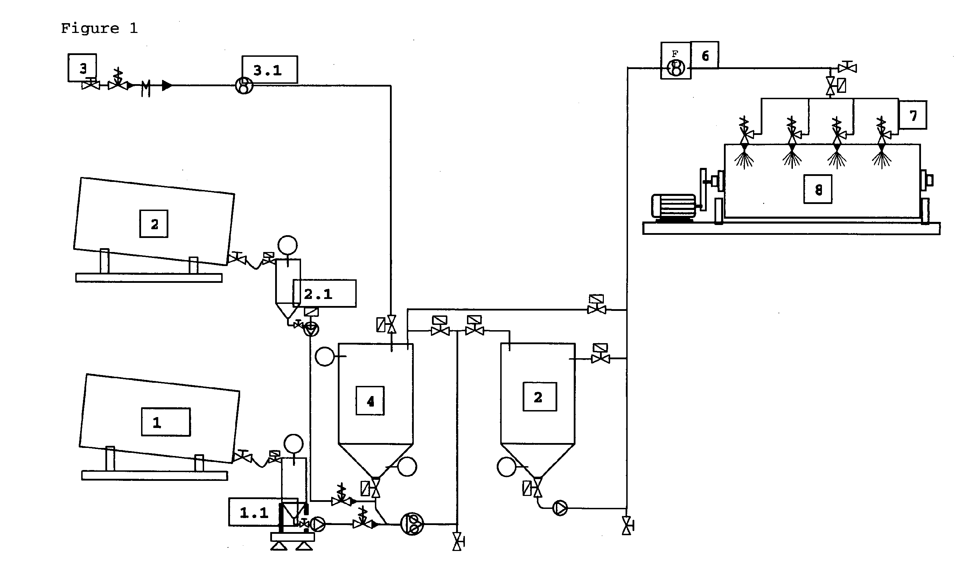

Figure 1 represents a process diagram for the implementation of the process.

The individual meanings are as follows:

| **Item** | **Description** |
|---|---|
| 1 | Active substance |
| 1.1 | Active substance metering |
| 2 | Emulsifier |
| 2.1 | Emulsifier metering |
| 3 | Water feed |
| 3.1 | Water metering |
| 4 | Mixing and emulsifying vessel |
| 5 | Metering vessel for finished emulsions |
| 6 | Metering of the emulsion |
| 7 | Injection of the emulsion |
| 8 | Batch mixer |

The production takes place, for example, discontinuously, batchwise in a mixing vessel (4) by means of a shear pump (fig. 1).

For this purpose, according to the desired batch size, a quantity of water metered volumetrically using an oscillating piston flowmeter (3.1) is initially charged into the mixing vessel.

The contents of the mixing vessel flow to the shear pump and are recirculated into the mixing vessel during the mixing and emulsifying cycle.

Meanwhile, emulsifier is injected into the feed line for the shear pump from the pump supply vessel (2.1) by means of a membrane pump volumetrically via a metering valve. In parallel, the formulation quantity, dependent on the preselected quantity of active substance, particularly of oil, is weighed in from the pump supply vessel (1.1) by means of a gear pump and balance together with a metering valve.

After charging a minimum water quantity of 4 1, the circulation can be operated by the shear pump with simultaneous metered addition of emulsifier and oil, even while water is being metered; thus it is possible to minimize the cycle time. Once the emulsion has been completed, this is ready and, when a minimum level preset by a control system is reached in the metering vessel (5), it is transferred into this by the shear pump.

From the metering vessel, the formulation-dependent quantity of emulsion is fed into the batch mixer (8) volumetrically via a gear pump and an oscillating piston flowmeter (6). The emulsion is sprayed through full cone nozzles (7) for the purpose of distribution.

To stabilize the emulsion, provision is made for the contents of the metering vessel to be pumped over at prolonged intervals.

The design of the plant permits great flexibility in the band width of the possible additions of the active substance based on the finished product feed mix, taking into account parameters typical of the plant, such as batch size, cycle times, mixing times and mixing accuracy.

The active substance content in the finished product can be influenced by two measures: variation of the concentration of the active substance content on addition to the mixing vessel and variation of the quantity of emulsion added to the mixed feed between 0.1% and 0.5 wt.%, based on the feed mix. An addition of 0.1% is seen as the lowest possible addition that can be incorporated sufficiently accurately in mixers available in practice.

The batch size in the mixing vessel can be adapted to the quantity of feed mix charged between 5 l and 60 l, particularly between 15 l and 40 l. It is advantageous to produce the emulsion for more than one batch of feed mix, but preparation is desirable only for the subsequent batches planned in the short term to avoid long standing times and contamination of the product.

It is possible to return the product to the mixing vessel, thus incorporating emulsion residues for subsequent batches with a different formulation.

Vessels and pipes can be cleaned in place. For reasons of hygiene, means of flushing the pipes are also provided.

The following examples are intended to explain the implementation of the invention.

### Example 1

100 g of tap water at ambient temperature are initially charged into a 250 ml beaker and 0.1 g of emulsifier ammonium alginate (E 403) are added, stirring with an Ultra-Turrax T25 stirrer with a dispersing tool. 3 g of vitamin E acetate oil are then added dropwise through a dropping funnel. Stirring is then carried out for 2 min at 9,500 rpm. A uniform, milky emulsion is obtained, which remains stable for at least 6 hours.

Instead of the solid ammonium alginate, liquid emulsifiers consisting of glycerol-polyethylene glycol ricinoleate (E484) or a polysorbate 80 (E433) are used with good results. Other emulsifiers, such as lecithins, pectins or similar, also lead to an emulsion in this way.

### Example 2

200 ml of water are initially charged into a 400 ml beaker and heated to 60°C in a water bath. In various tests, 0 to 1.23 g of emulsifier and 8 g of vitamin E acetate oil are added and stirred for 2 min using the Ultra-Turrax. Whereas, without an emulsifier, no homogeneous emulsion is formed, in the other cases this is homogeneous, stable for at least 6 hours without any separation phenomena and stable for at least 24 hours from 0.24 g of emulsifier per batch.

### Example 3

An emulsion of 100 ml of warm water (60°C), 0.2 g of emulsifier polysorbate 80 (E 433) and 2 g of vit. E acetate oil is produced with the aid of the Ultra- Turrax T25. After approx. 20 min a partial quantity is removed from the emulsion for analysis of the contents (HPLC). 98.5% of the quantity of vit. E acetate theoretically used is found.

### Example 4

On a 20-litre stainless steel vessel with a bottom valve, the discharge is connected on the inlet side with a commercially available side channel pump with a flow rate of approx. 3 m³/min at a back pressure of 4 - 5 bar and on the delivery side with a static mixer (in-line blender). The contents of the vessel can now be circulated via a bypass, wherein drops of oil are sheared at the "chicane" of the static mixer and thus comminuted.

Approx. 8000 ml of water temperature-controlled to approx. 60°C and 8 g of emulsifier E 484 are initially charged and within 1 min, 800 g of vit. E acetate oil are fed in. After a pumping period of 1 to 2 min, a uniform, milky emulsion is obtained.

In the bypass system described, a shear pump is installed instead of the side channel pump with in-line blender. After charging hot water at 60°C and 8 g of emulsifier (E 484), 900 g of vit. E acetate oil are delivered into the pumped circuit within 2 min and emulsified as a result of the shear forces in the shear pump. The emulsion is . homogeneous for several hours.

In a closed, 20-litre stirred vessel with an Ultra-Turrax type T 65, 8000 ml of tap water preheated to 60°C and 8 g of emulsifier (E 484) are emulsified with 800 g of vit. E acetate oil within 1 min (motor speed 2900 rpm) to form a stable emulsion.

In a beaker with a temperature control device, vit. E acetate oil is heated to 60°C to reduce its viscosity. Using a hose pump, approx. 10 g of vit. E acetate oil and, using a reciprocating pump, approx. 1000 ml of cold deionized water are pumped through a micromixer at the same time within approx. 2 min. The internal structure of the micromixer is designed such that the two components are passed through the narrow channels and pores, mixed and emulsified within a short time. The oil-water emulsion (1:100) is stable for several days. In general, other high-speed stirrers or in-line dispersing machines with an adequate shear action can be used to form the emulsion.

### Example 5

200 ml of water are initially charged into a 400 ml beaker, 0.2 g of emulsifier E 484 and 8 g of vitamin E acetate oil are added and stirred for 2 min using the Ultra-Turrax. In various tests, the temperature is increased from 20°C via 40°C and 60°C to 80°C. As the temperature increases, the homogeneity of the emulsion and the storage stability become better.

### Example 6

200 g of tap water are initially charged into a 400 ml beaker, 0.2 g of emulsifier, preferably E 484, are added and heating is performed to 60°C in a water bath. While stirring with an Ultra-Turrax T25 stirrer, 2 g of vitamin E acetate oil (RT) are fed in through a dropping funnel. The oil is then stirred (motor setting 9,500 rpm) for 2 min. The approx. 1 wt.% emulsion (or oil) is very homogeneous and remains physically stable for days.

In the same way, under the same conditions and with the same quantity of emulsifier, an emulsion of 200 g of water and approx. 23 g of vit. E acetate oil is produced. The approx. 10 wt.% emulsion is initially very homogeneous. After standing for 2 h, a creamy layer forms on the surface with a somewhat higher proportion of oil. The emulsion can be homogenized again very well simply by stirring manually.

In the same way an approx. 20 wt.% emulsion (or oil) is produced in a 600 ml beaker from 200 ml of water, 0.2 g of emulsifier and 137 g of vit. E acetate oil. The cream formation occurring after some time can be eliminated by manual stirring in this case too.

An approx. 60 wt.% emulsion can be produced under the same conditions as described above. An aqueous phase separation forms from the bottom only after 2 h.

### Example 7

200 ml of water at room temperature are initially charged into a 400 ml vessel, and then 4 g of nicotinamide and 0.1 g of emulsifier E 433 are added, stirring. After metering in 2 g of vit. E acetate oil using a gear pump, emulsification is then carried out for 1 to 2 min at approx. 13,500 rpm. The emulsion is stable for several days.

In a 400 ml vessel, instead of water, 200 g of Liquimeth® and, while stirring with the Ultra-Turrax, 1 g of vit. E acetate oil are emulsified in the usual way. An emulsion / suspension without any oil depositions is formed.

### Example 8

200 ml of water and 0.2 g of emulsifier E 484 are initially charged into a 400 ml beaker at room temperature and 2 g of retinyl acetate oil (1.5 million I.U./g in peanut oil - theoretical content approx. 51.6% pure retinol acetate) are fed in while stirring with the Ultra Turrax T25. A very homogeneous, milky emulsion is formed, which remains stable for a prolonged period.

200 ml of water, 0.2 g of emulsifier and 77 g of choline chloride 75% are initially charged into a 400 ml beaker at 60°C and stirred with the Ultra-Turrax after adding 1.2 g of retinyl acetate oil. The emulsion is very homogeneous and does not separate even after a prolonged period.

200 ml of water and 0.2 g of emulsifier are initially charged into a 600 ml beaker at 60°C. 5 g of NSA and 77 g of choline chloride 75% are added, with stirring. With the Ultra-Turrax, 5 g of vitamin E acetate and 0.8 g of retinyl acetate (1.5 million I.U./g) are then added consecutively. After stirring for 2 min, a very milky emulsion is obtained, which is homogeneous for several hours.

### Example 9

An emulsion of 8000 ml of water, 4.6 g of emulsifier (E 433) and 284 g of vit. E acetate oil is produced at 60°C with the aid of the Ultra-Turrax T 65.

A partial quantity of this emulsion is taken for the analytical investigation of the active substance content of vit. E acetate by HPLC.

Result: the theoretical content of approx. 3.4% vit. E acetate is confirmed with an experimental value of approx. 3.5%.

Approx. 230 g of this finished, homogeneous emulsion are pumped into a pressurized transporter tank using a membrane pump. After closing the inlet valve, the vessel is filled with approx. 3 bar compressed air. An initial charge of 80 kg of broiler feed is mixed in a ribbon mixer (e.g. from Drais). By opening the bottom valve, the emulsion is sprayed into the running mixer and on to the feed through a Kreisl spray nozzle (e.g. Schlick, model 121, 1.2 mm D, 60°) within 15 s. On completion of the spraying, mixing is continued for 4 min.

The theoretical vit. E acetate supplementation in the feed is 100 ppm.

In order to determine the quality of the distribution, 8 samples are taken from the outlet stream of the mixer and analyzed.

The variation coefficient (VC) is determined from the averages of the individual results, the value of which represents a measure of mixing quality (homogeneity) of the active substance: VC [%] = 2.8.

As described, 115 g of the emulsion are applied on to the feed in a ribbon mixer. In this case, however, the addition does not take place in a finely divided form through a spray nozzle but more coarsely through a thin feed tube pressed together at the end. The emulsion passes on to the material being mixed as a thin jet within 20 s. The rate of supplementation in the feed is theoretically 50 ppm in this case.

A VC [%] of 2.9 is obtained in this case.

Definition: the variation coefficient VC is the standard deviation of the values obtained from the analytical determination of content of a series of samples divided by their average, cf. also Kuster/Thiel, Rechentafeln fur chemische Analytik, p. 236; de Gruyter 1982.

## Claims

1. Process for the production of bulk materials containing small quantities of one or more active substances, wherein
a) the active substance(s) is/are dissolved in water or optionally emulsified with the addition of an emulsifier, and
b) the solution (emulsion) containing water, active substance(s) and optionally emulsifier is applied on to the bulk material and mixed with this.

2. Process according to claim 1, wherein mixed feed is used as the bulk material.

3. Process according to claim 1, wherein the active substance(s) is/are applied in a quantity of 10 ppm to 0.5 wt.% in each case, based on the mixed feed.

4. Process according to claim 1, wherein one or more of the vitamins from the group A, D, E, nicotinamide, other B vitamins, provitamins or their esters are used as the active substance.

5. Process according to claim 1, wherein carotinoids or xanthophylls are used as active substances.

6. Process according to claim 1, wherein enzymes are used as active substances.

7. Process according to claim 1, wherein amino acids are used as active substances.

8. Process according to one or more of claims 1, 4 to 7, wherein aqueous emulsions or solutions with an active substance content of 1 to 60 wt.%, particularly 1 to 50 wt.%, based on the total quantity, are used.

9. Process according to claim 1, wherein the emulsions contain an emulsifier in a quantity of 0.1 to 15 wt.%, based on the quantity of active substance.

10. Process according to claim 1, wherein the emulsion or solution is used within a period of > 0 min to 24 h after its production.
